# EUROPEAN PATENT APPLICATION

(11) **EP 2 620 852 A1**
(43) Date of publication of application: **31.07.2013**
(21) Application number: 11826681.6
(22) Date of filing: 26.08.2011
(51) Int. Cl.: G06F 3/048, G06F 3/041

(54) **DISPLAY DEVICE**

(30) Priority: 24.09.2010 JP 2010213926
(71) Applicant: NEC Corporation, Tokyo 108-8001 (JP)
(72) Inventor: MIYAHARA, Masaki, Tokyo 108-8001 (JP)
(74) Representative: Vossius & Partner
(86) International application number: PCT/JP2011/069305
(87) International publication number: WO 2012/039235

(57) **Abstract**

When a display unit (120) that is provided with a touch panel capability and which displays each of a plurality of screens on a respective display region of display regions (121-1 and 121-2) has sensed a predetermined contact pattern, movement selection display instruction unit (130) displays a movement selection display for selecting whether or not to move the screen that is being displayed, and when the display unit (120) senses contact with the movement selection display, a movement unit (140) moves the screen that is being displayed on one of the display regions (121-1 or 121-2) to the other display region (121-2 or 121-1).

## Description

### Technical Field

The present invention relates to a display device, a display method, and a program for displaying information, and more particularly relates to a display device, a display method, and a program for displaying information on a plurality of screens.

### Background Art

Recent years have seen the popularization of information terminal devices in which are mounted displays (display units) that are equipped with a touch panel capability. In addition, devices have been introduced in which the screen that is being displayed on a display changes and moves in accordance with the movement of a finger placed in contact with the display.

For example, moving a finger that is held in contact with the display causes the screen to move in the direction of movement of the finger, and spreading apart fingers that are held in contact with the display causes expanded display of the screen.

In addition, devices that mount not one display but a plurality of displays are also appearing on the market. Still further, techniques have been devised in which, in a device in which two displays are mounted, carrying out a predetermined operation causes the screens that are being displayed on each display to switch displays with each other (see Patent Document 1).

Applying the above-described capability of moving a screen in accordance with the movement of a contacting finger to the technique described in Patent Document 1 enables the movement of screens among a plurality of displays similar to flipping pages of a book.

### Literature of the Prior Art

### Patent Documents

Patent Document 1: Japanese Unexamined Patent Application Publication No. 2006-314610

### Summary of the Invention

### Problem to be Solved by the Invention

However, the finger contact pattern for instructing movement of screens among a plurality of displays can be taken to be input instructions to the application that is being displayed on the displays. In such a case, the problem arises that the screen moves regardless of whether the finger contact is an input instruction, with the result that an operation is carried out that is not intended by the person operating the device.

It is an object of the present invention to provide a display device, a display method, and a program that solve the above-described problem.

### Means for Solving the Problem

The display device of the present invention includes:
a display unit that is provided with a touch panel capability and that, by the processing of an application, displays each of a plurality of screens on a respective region of a plurality of display regions;
a movement selection display instruction unit that, when the display unit has sensed a predetermined contact pattern in, among the plurality of display regions, a first display region, displays on the first display region a movement selection display for selecting whether to move the screen that is being displayed on the first display region; and
a movement unit that, when the display unit has sensed contact to the movement selection display, moves the screen that is being displayed on the first display region to, among the plurality of display regions, a second display region other than the first display region.

The display method of the present invention is a display method for displaying screens on a device that is equipped with a display that has a touch panel capability and that, by means of processing of an application, displays each of a plurality of screens on a respective display region among a plurality of display regions, and includes steps of:
sensing contact with the display;
when the display senses a predetermined contact pattern in, among the plurality of display regions, a first display region, displaying in the first display region a movement selection display for selecting whether to move the screen that is being displayed in the first display region; and when contact with the movement selection display is sensed, moving the screen that is being displayed in the first display region to, of the plurality of display regions, a second display region other than the first display region.

The program of the present invention is a program for causing a device that is equipped with a display that has a touch panel capability and that, by means of processing of an application, displays each of a plurality of screens on a respective region of a plurality of display regions to execute procedures of:
sensing contact with the display;
when the display has sensed a predetermined contact pattern in, of the plurality of display regions, a first display region, displaying in the first display region a movement selection display for selecting whether to move the screen that is being displayed in the first display region; and
when contact with the movement selection display is sensed, moving the screen that is being displayed in the first display region to, of the plurality of display regions, a second display region other than the first display region.

### Effect of the Invention

As described hereinabove, the present invention can prevent an operation from being carried out that results from a predetermined contact pattern but that is not intended by the user that is operating the device.

### Brief Description of the Drawings

FIG. 1 shows the first exemplary embodiment of a display device of the present invention.
FIG. 2 is a flow chart for describing the display method in the display device shown in FIG. 1.
FIG. 3 shows an example of screens that are displayed in display regions shown in FIG. 1.
FIG. 4 shows an example of a contact pattern that is sensed in the display region shown in FIG. 1.
FIG. 5 shows an example of a movement selection display that is displayed in the display region shown in FIG. 1.
FIG. 6 shows an example of screens that are displayed in the display regions after the movement of Step 6.
FIG. 7 shows the second exemplary embodiment of the display device of the present invention.
FIG. 8 shows an example of the internal configuration of the registration unit shown in FIG. 7.
FIG. 9 shows another example of the internal configuration of the registration unit shown in FIG. 7.
FIG. 10 is a flow chart for describing the display method in the display device shown in FIG. 7.
FIG. 11 shows the third exemplary embodiment of the display device of the present invention.
FIG. 12 is a flow chart for describing the display method in the display device shown in FIG. 11.
FIG. 13 shows an example of the cancel selection display displayed on the display unit shown in FIG. 11.

### Best Mode for Carrying Out the Invention

Exemplary embodiments of the present invention are next described with reference to the accompanying drawings.

### First Exemplary Embodiment

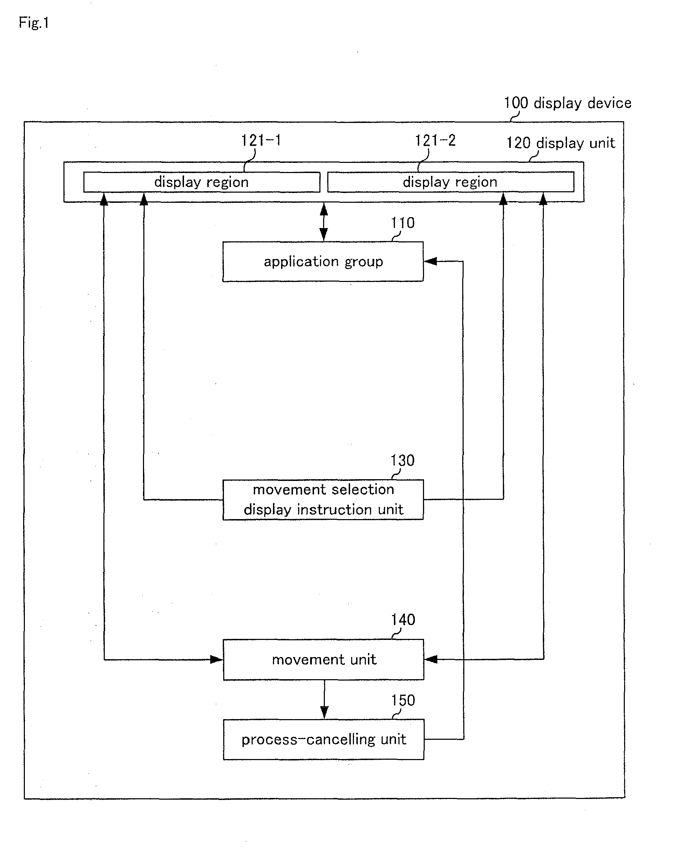

FIG. 1 shows the first exemplary embodiment of the display device of the present invention.

As shown in FIG. 1, display device 100 in the present exemplary embodiment is provided with display unit 120, movement selection display instruction unit 130, movement unit 140, and process-cancelling unit 150.

Application group 110 that is the collection of applications that operate in display device 100 is mounted in display device 100. No particular limitations are here imposed on the number of applications that are included in application group 110. The applications that are included in application group 110 are acquired from the network or acquired by reading from a storage medium. "Application" in the following description refers to an application that is included in application group 110.

Display unit 120 is a display that is equipped with a touch panel capability and that, by means of processing of an application, displays each of a plurality of screens on a respective region among display regions 121-1 and 121-2. Display unit 120 shown in FIG. 1 displays each screen on two display regions but may also display screens on three or more display regions. Further, display unit 120 may be physically separated for each of the plurality of display regions. In other words, display unit 120 may be configured from the same number of displays as the number of display regions. In addition, display unit 120 may display the screens that are displayed on each of display regions 121-1 and 121-2 adjacent to each other. For example, when screens are displayed on each of two display regions 121-1 and 121-2 as shown in FIG. 1, the screen displayed on display region 121-1 and the screen displayed on display region 121-2 are displayed adjacent to each other in a vertical direction or a horizontal direction.

When display unit 120 senses contact of a predetermined pattern on either of display region 121-1 or display region 121-2, movement selection display instruction unit 130 displays, on the display region in which contact was sensed, a movement selection display for selecting whether to move the screen that is being displayed on the display region. For example, when contact is sensed in display region 121-1, movement selection display instruction unit 130 instructs display region 121-1 to display a movement selection display for selecting whether to move the screen that is being displayed on display region 121-1 to display region 121-2. Although no particular stipulations are imposed regarding the display format of this movement selection display, a display prompting "move" is preferably shown (for example, an arrow pointing from display region 121-1 to display region 121-2 or a triangle having an apical angle directed from display region 121-1 toward display region 121-2).

Alternatively, whether or not to make the above-described determination when a predetermined contact pattern is sensed on one of display region 121-1 and display region 121-2 is set in advance. In addition, this "predetermined pattern" is set in advance and stored in display device 100. For example, the predetermined pattern may be a contact pattern such as a finger sweeping from the left side to the right side of a paper or a contact pattern such as writing a predetermined combination of lines or a character (such as "z" of the alphabet).

When contact with the movement selection display that movement selection display instruction unit 130 is displaying is sensed, movement unit 140 moves the screen that is being displayed on, of the plurality of display regions, the first display region to, of the plurality of display regions, a second display region other than the first display region. In other words, movement unit 140 moves the screen that is being displayed on display region 121-1 to display region 121-2. Alternatively, movement unit 140 moves the screen that is being displayed on display region 121-2 to display region 121-1.

When movement unit 140 has moved the screen, process-cancelling unit 150 cancels the process that the application carried out according to the predetermined contact pattern. This corresponds to a typical "UNDO" process.

The display method in the display device 100 shown in FIG. 1 is next described.

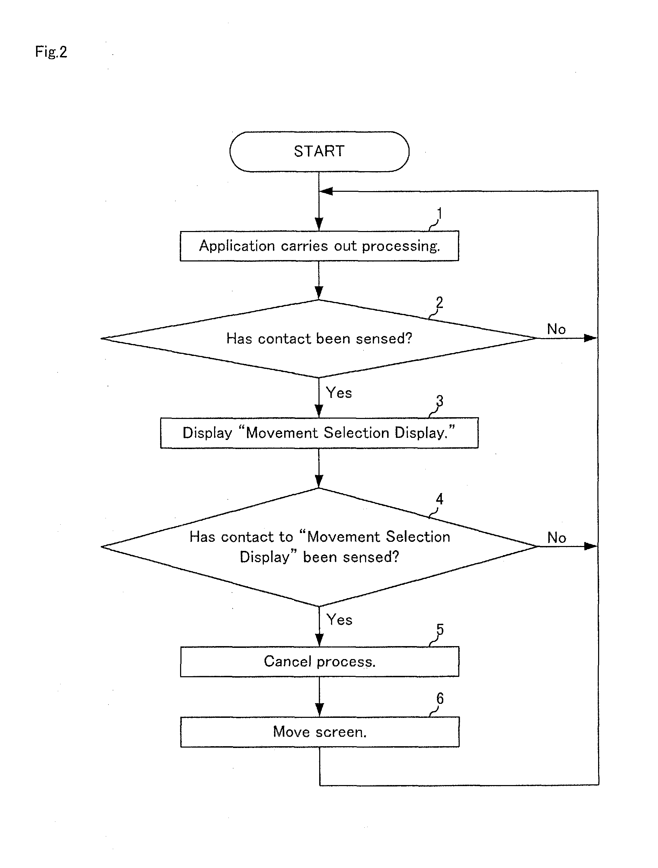

FIG. 2 is a flow chart for describing the display method in display device 100 shown in FIG. 1.

An application is first activated, and when the processing of the application is being carried out in Step 1, determination of whether a predetermined contact pattern has been sensed in display unit 120 is performed in Step 2.

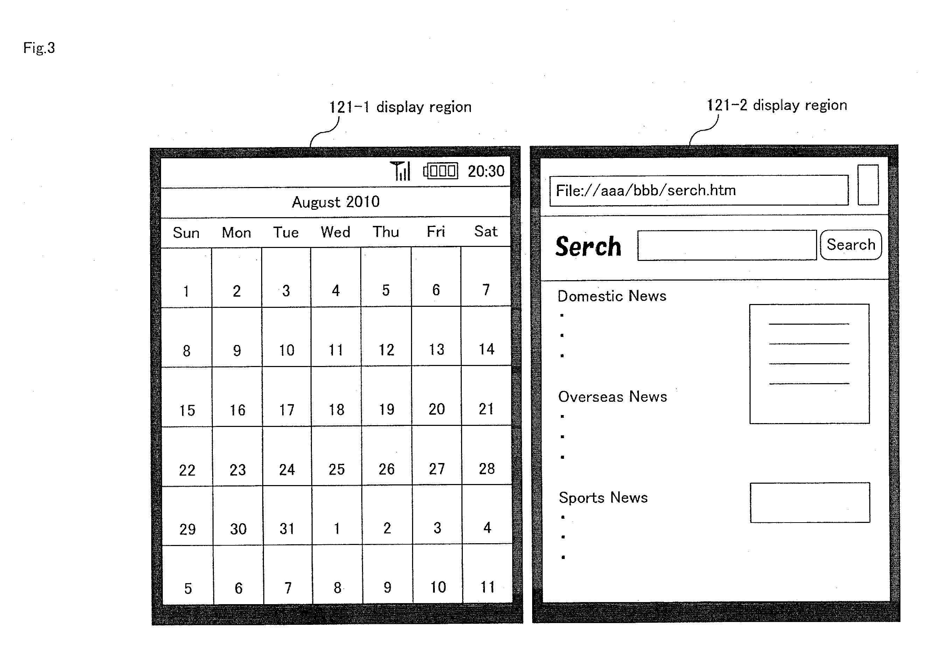

FIG. 3 shows an example of screens that are displayed on display region 121-1 and display region 121-2 shown in FIG. 1. An example is here shown in which the screens are displayed next to each other with the screen displayed in display region 121-1 on the left and the screen displayed in display region 121-2 on the right.

As shown in FIG. 3, an application that is a scheduler is activated in display region 121-1 and the schedule screen is being displayed. On display region 121-2, on the other hand, an application that is a browser is active, and the screen of this browser is being displayed.

When a predetermined contact pattern is sensed on display unit 120 (for example in display region 121-1), movement selection display instruction unit 130 instructs display unit 120 to display a movement selection display for selecting whether to move the screen that is being displayed in display region 121-1 from display region 121-1 to display region 121-2, and the movement selection display is displayed in display unit 120 in Step 3.

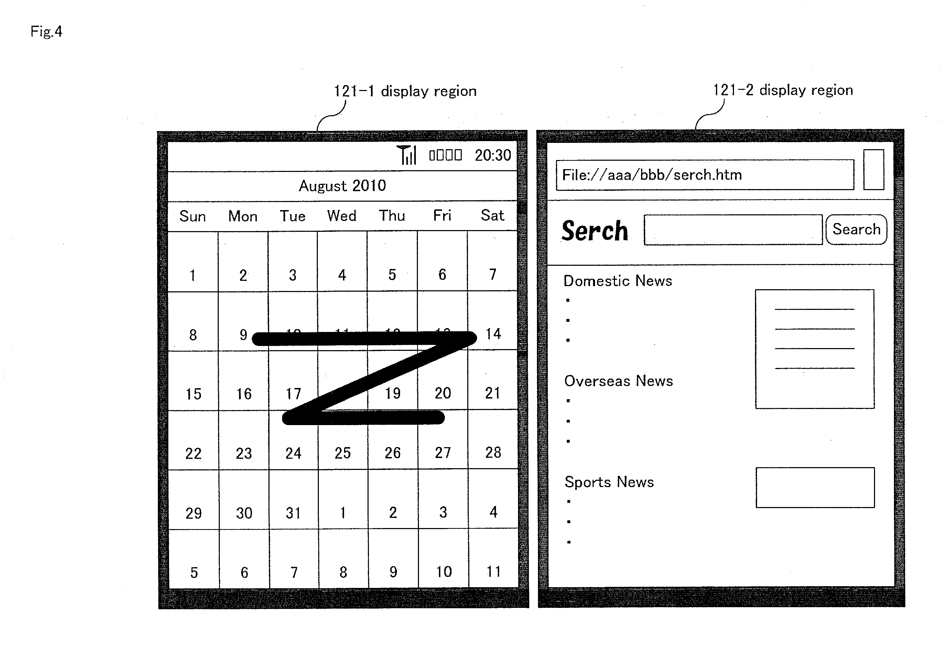

FIG. 4 shows an example of the contact pattern that is sensed in display region 121-1 shown in FIG. 1.

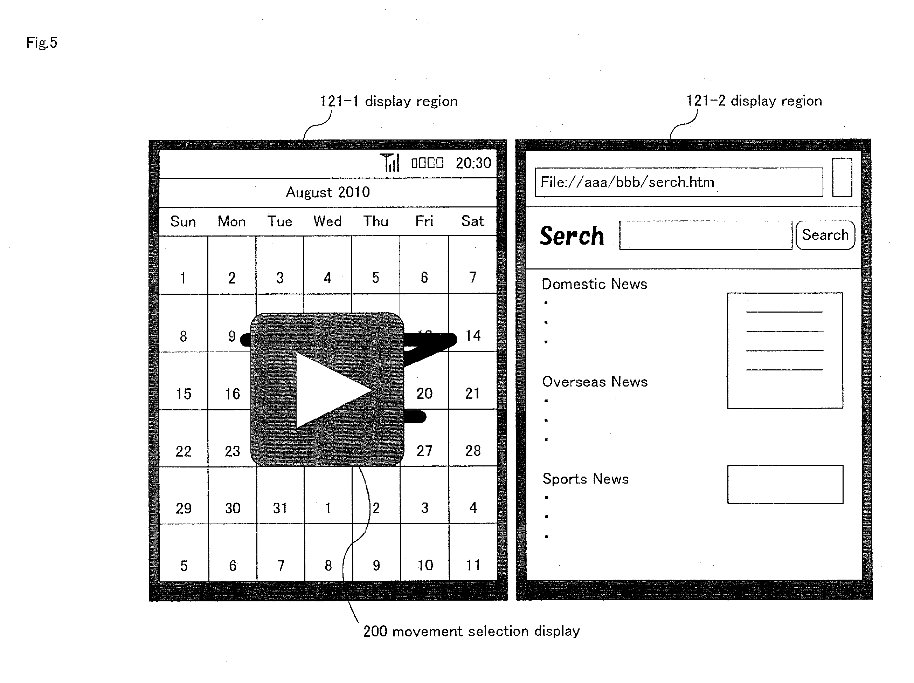

FIG. 5 shows an example of the movement selection display that is displayed in display region 121-1 shown in FIG. 1.

When a contact pattern such as writing "Z" of the alphabet is sensed as a predetermined contact pattern in display region 121-1 as shown in FIG. 4, movement selection display 200 is displayed overlaid on the screen that is currently displayed (in this case, a scheduler) in display region 121-1.

It is next judged whether contact with movement selection display 200 in display unit 120 in Step 4 is sensed. This may be judged as contact with movement selection display 200 is sensed when contact is carried out in movement selection display 200 shown in FIG. 5 or contact that is carried out in the triangular portion displayed in movement selection display 200.

When it is judged in display unit 120 that contact has not been sensed with movement selection display 200 in Step 4, movement selection display 200 is deleted and processing of the application is carried out. More specifically, it may be judged that contact with movement selection display 200 was not sensed when contact with movement selection display 200 is not sensed within a preset time interval or when contact with a region other than the display region of movement selection display 200 is sensed.

On the other hand, when it is judged in Step 4 that contact with movement selection display 200 is sensed, process-cancelling unit 150 cancels processing carried out by the application according to the predetermined contact pattern in Step 5. In other words, in the example shown in FIG. 4, the process that is carried out by the application for a "Z" contact (such as writing "Z" on the scheduler) is cancelled (the "Z" that was written is deleted).

In addition, the screen that was being displayed in display region 121-1 is moved by movement unit 140 to display region 121-2 in Step 6.

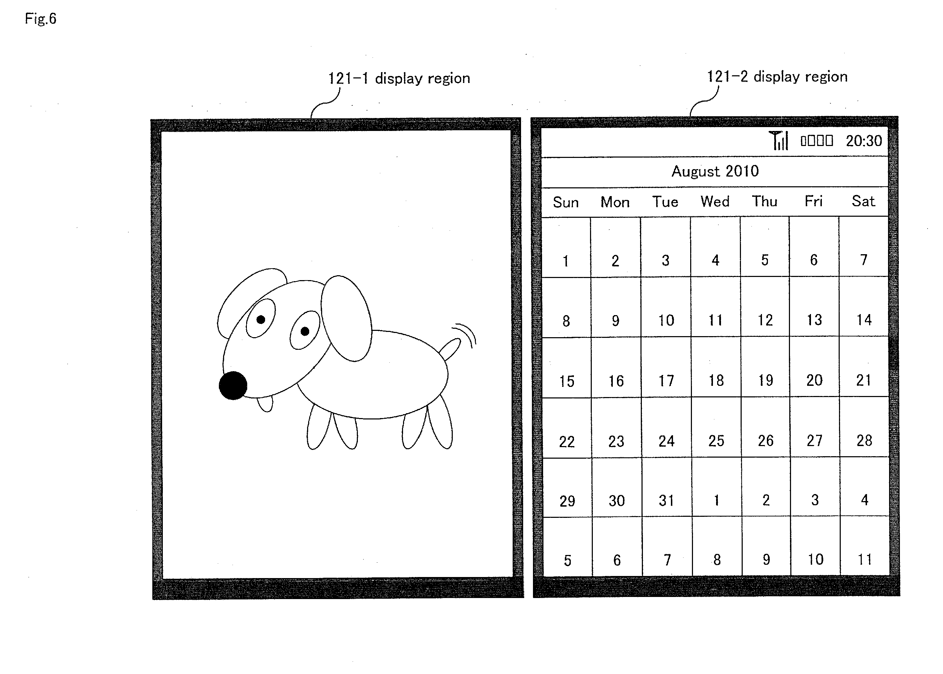

FIG. 6 shows an example of the screens that are displayed in display region 121-1 and display region 121-2 after the movement of Step 6.

As shown in FIG. 6, the screen that was displayed in display region 121-1 shown in FIG. 4 (scheduler) is moved to display region 121-2 and displayed. The screen that is displayed in display region 121-1 at this time is not here stipulated. For example, a screen that was set in advance may be displayed, or a screen that is displayed by the application that is next activated may be displayed. Alternatively, the screen that was displayed in display region 121-2 may be displayed in display region 121-1.

### Second Exemplary Embodiment

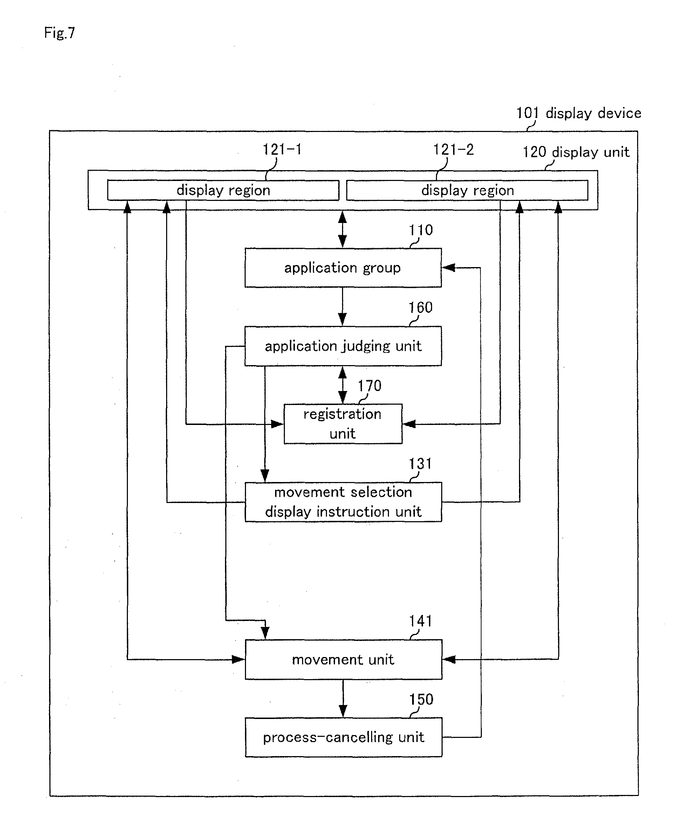

FIG. 7 shows the second exemplary embodiment of the display device of the present invention.

As shown in FIG. 7, display device 101 in this embodiment is realized by adding application judging unit 160 and registration unit 170 to display device 100 shown in FIG. 1. In addition, display device 101 is further provided with movement selection display instruction unit 131 in place of movement selection display instruction unit 130 that is shown in FIG. 1. Display device 101 is further provided with movement unit 141 in place of movement unit 140 shown in FIG. 1.

When display unit 120 has sensed a predetermined contact pattern in either display region 121-1 or display region 121-2, application judging unit 160 judges whether the application that is displaying the screen in the display region in which contact was sensed is an object application that has been registered.

Registration unit 170 stores application information that indicates object applications that have been the object of processing of movement selection display instruction unit 131 (to be described).

When application judging unit 160 judges that the application that is displaying a screen in the display region in which contact was sensed is an object application that has been registered in registration unit 170, movement selection display instruction unit 131 displays the above-described movement selection display in the display region in which contact was sensed. For example, when contact is sensed in display region 121-1, if the application that is displaying the screen in display region 121-1 is an object application that has been registered in registration unit 170, movement selection display instruction unit 131 instructs display region 121-1 to display a movement selection display for selecting whether to move the screen that is being displayed in display region 121-1 to display region 121-2. No particular stipulation is imposed on the display format of this movement selection display, but a display that prompts "move" is preferable (for example, an arrow pointing from display region 121-1 to display region 121-2 or a triangle having an apical angle directed from display region 121-1 toward display region 121-2).

When display unit 120 has sensed contact with the movement selection display that is displayed by movement selection display instruction unit 130 or when application judging unit 160 judges that the application that is displaying the screen in the display region in which contact was sensed is not an object application that has been registered, movement unit 141 moves the screen that is being displayed in, of the plurality of display regions, a first display region to, a second display region other than the first display region. In other words, movement unit 141 moves the screen that is being displayed in display region 121-1 to display region 121-2. Alternatively, movement unit 141 moves the screen that is being displayed in display region 121-2 to display region 121-1.

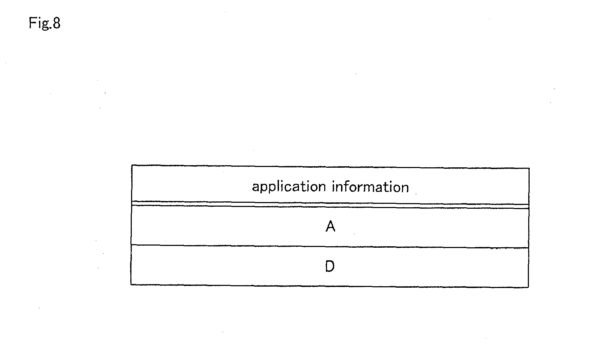

FIG. 8 shows an example of the internal construction of registration unit 170 shown in FIG. 7.

As shown in FIG. 8, registration unit 170 shown in FIG. 7 stores (registers) application information.

For example, application information "A" is stored as shown in FIG. 8. This indicates that the application for which the application information is "A" is an object application that is the object of the processing of movement selection display instruction unit 131.

In addition, application information "D" is stored as shown in FIG. 8. This indicates that the application for which the application information is "D" is an object application that is the object of processing of movement selection display instruction unit 131.

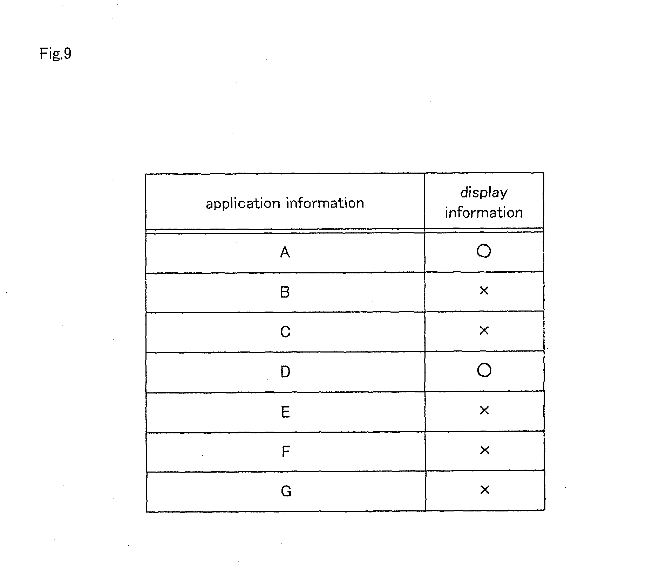

FIG. 9 shows another example of the internal construction of registration unit 170 shown in FIG. 7.

As shown in FIG. 9, registration unit 170 shown in FIG. 7 stores (registers) application information of applications that can be activated in display device 101 in association with display information.

For example, "A"-"G" are stored in the application information. This indicates that the application information of applications that can be activated in display device 101 is "A"-"G."

In addition, "O" or "x" is stored in the display information. This display information is information indicating whether an application indicated by application information that is stored in correspondence with the display information is an object of processing of movement selection display instruction unit 131.

As shown in FIG. 9, application information "A" is stored in correspondence with display information "O." This indicates that the application for which the application information is "A" is an object application that is the object of processing of movement selection display instruction unit 131.

In addition, as shown in FIG. 9, application information "B" is stored in correspondence with display information "×." This indicates that the application for which the application information is "B" is not an object application that is the object of processing of movement selection display instruction unit 131.

In addition, as shown in FIG. 9, application information "C" is stored in correspondence with display information "x." This indicates that the application for which the application information is "C" is not an object application that is the object of processing of movement selection display instruction unit 131.

Still further, as shown in FIG. 9, application information "D" is stored in correspondence with display information "O." This indicates that the application for which the application information is "D" is an object application that is the object of processing of movement selection display instruction unit 131.

In addition, as shown in FIG. 9, application information "E" is stored in correspondence with display information "×." This indicates that the application for which the application information is "E" is not an object application that is the object of processing of movement selection display instruction unit 131.

In addition, as shown in FIG. 9, application information "F" is stored in correspondence with display information "x." This indicates that the application for which the application information is "F" is not an object application that is the object of processing of movement selection display instruction unit 131.

In addition, as shown in FIG. 9, application information "G" is stored in correspondence with display information. "x." This indicates that the application for which the application information is "G" is not an object application that is the object of processing of movement selection display instruction unit 131.

These items of information may be registered in registration unit 170 in advance or may be registered by the process to be described.

The display method in display device 101 shown in FIG. 7 is next described.

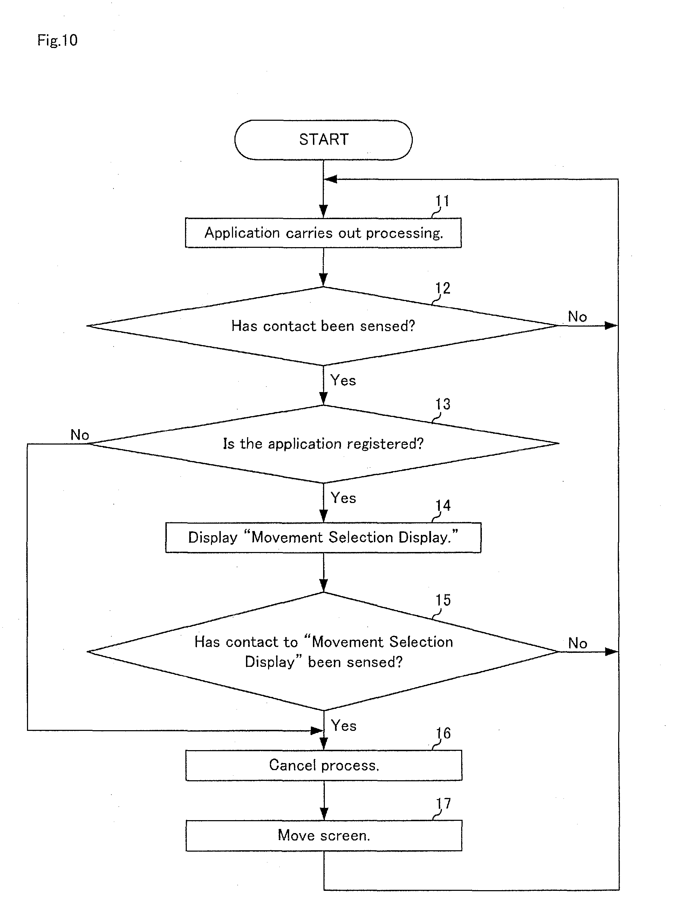

FIG. 10 is a flow chart for describing the display method in display device 101 shown in FIG. 7.

An application is first activated, and when the processing of the application is being carried out in Step 11, judgment is made in Step 12 whether a predetermined contact pattern is sensed in display unit 120.

When a predetermined contact pattern (such as the "Z" of the alphabet shown in FIG. 4) is sensed on display unit 120 (for example, in display region 121-1), application judging unit 160 judges in Step 13 whether the application that is displaying the screen in display region 121-1 is an application that has been registered in registration unit 170.

When it has been judged that the application that is displaying the screen in display region 121-1 is an application that has been registered in registration unit 170, movement selection display instruction unit 131 instructs display unit 120 to display the movement selection display for selecting whether the screen that is being displayed in display region 121-1 is to be moved from display region 121-1 to display region 121-2, and movement selection display 200 is displayed on display unit 120 in Step 14 as shown in FIG. 5.

It is next judged in Step 15 whether or not contact with movement selection display 200 has been sensed in display unit 120. The standard for this judgment may be the same as described in the first exemplary embodiment.

When it is judged in Step 15 that contact with movement selection display 200 was not sensed in display unit 120, movement selection display 200 is deleted and processing of the application is carried out. More specifically, a judgment that contact with movement selection display 200 was not sensed may be made when contact with movement selection display 200 is not sensed within a preset time interval or when contact is sensed with a region other than the display region of movement selection display 200.

On the other hand, when it is judged in Step 15 that contact with movement selection display 200 was sensed in display unit 120, process-cancelling unit 150 cancels processing carried out by the application in accordance with the predetermined contact pattern in Step 16. In other words, in the example shown in FIG. 4, the process that was carried out by the application for a "Z" contact (such as writing "Z" on the scheduler) is cancelled (the "Z" that was written is deleted).

In addition, when it is judged in Step 13 that the application that is displaying the screen in display region 121-1 is not an application that is registered in registration unit 170, the process of Step 16 is carried out.

In addition, the screen that is being displayed in display region 121-1 is moved by movement unit 141 to display region 121-2 in Step 17.

### Third Exemplary Embodiment

Although an example was presented in the second exemplary embodiment in which object applications are registered in registration unit 170 in advance, object applications may be registered dynamically.

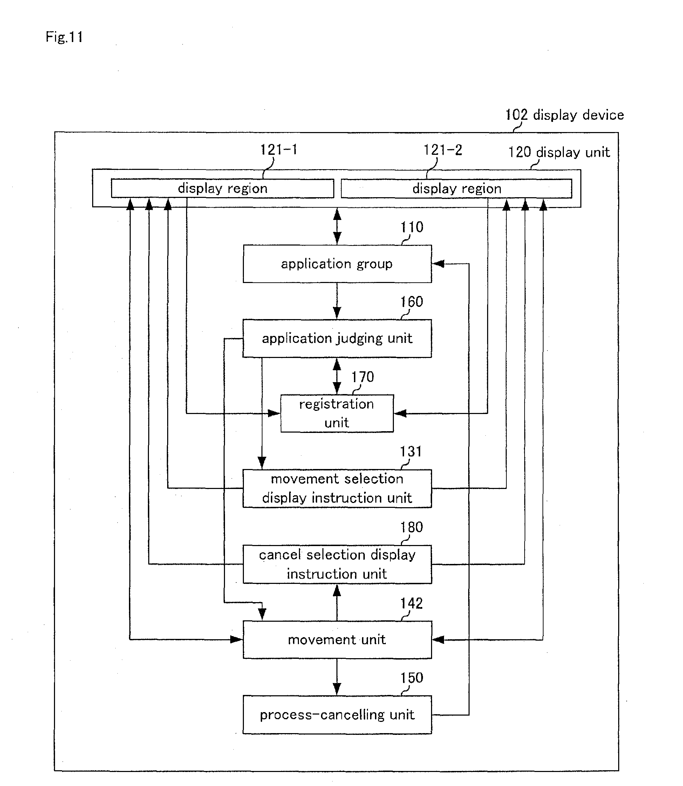

FIG. 11 shows the third exemplary embodiment of the display device of the present invention.

As shown in FIG. 11, display device 102 in the present exemplary embodiment is realized by adding cancel selection display instruction unit 180 to display device 101 shown in FIG. 7. In addition, display device 102 is further provided with movement unit 142 in place of movement unit 141 shown in FIG. 7.

When movement unit 142 has moved a screen, cancel selection display instruction unit 180 causes display unit 120 to display a cancel selection display for a predetermined time interval for selecting whether to cancel the movement. This predetermined time interval is set in advance. No particular stipulation is imposed regarding the display format of this cancel selection display but "cancel movement" is preferably prompted.

In addition, when display unit 120 senses contact with the cancel selection display, movement unit 142 cancels the movement. In other words, in this case, movement unit 142 returns the display of display regions 121-1 and 121-2 to the display that precedes carrying out the movement.

When display unit 120 has sensed contact with the cancel selection display at this time, registration unit 170 further registers the application that is displaying the screen in the display region of the movement destination as an object application. In other words, the application for which the movement of the screen from display region 121-1 to display region 121-2 is cancelled is registered as an object application. The internal construction of registration unit 170 may be the same as shown in FIG. 8 or FIG. 9.

The display method in display device 102 shown in FIG. 11 is next described.

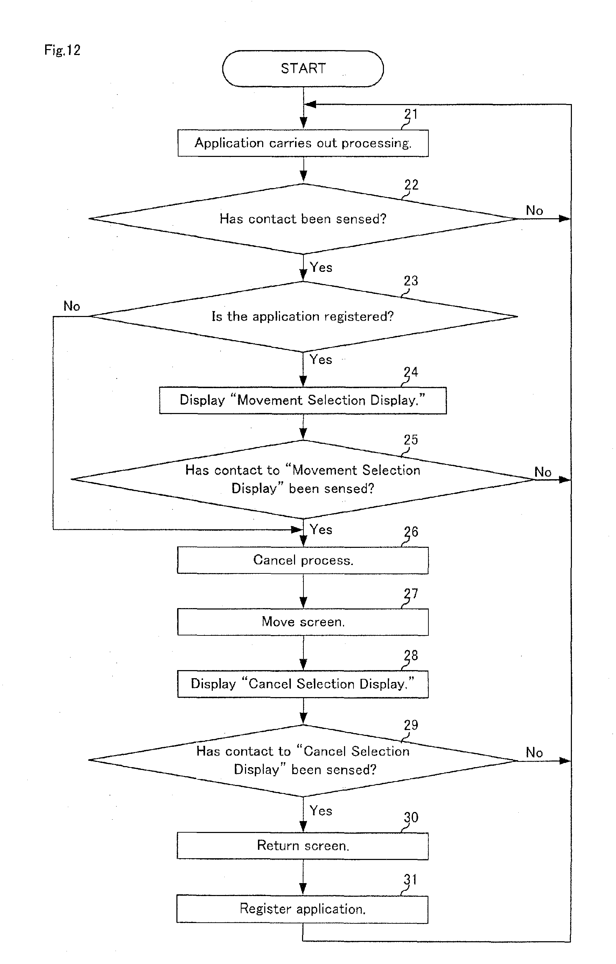

FIG. 12 is a flow chart for describing the display method in display device 102 shown in FIG. 11.

An application is first activated, and when processing of the application is being carried out in Step 21, judgment is made in Step 22 as to whether a predetermined contact pattern is sensed in display unit 120.

If a predetermined contact pattern (for example, "Z" of the alphabet shown in FIG. 4) is sensed in display unit 120 (for example, in display region 121-1), application judging unit 160 judges in Step 23 whether the application that is displaying the screen in display region 121-1 is an application that has been registered in registration unit 170.

When it is judged that the application that is displaying a screen in display region 121-1 is an application that has been registered in registration unit 170, movement selection display instruction unit 131 instructs display unit 120 to display the movement selection display for selecting whether to move the screen that is being displayed in display region 121-1 from display region 121-1 to display region 121-2, and movement selection display 200 is displayed on display unit 120 in Step 24 as shown in FIG. 5.

Judgment is then made in Step 25 regarding whether contact with movement selection display 200 is sensed in display unit 120. The standard for this judgment may be the same as described in the first exemplary embodiment.

When it is judged in Step 25 that contact to movement selection display 200 has not been sensed in display unit 120, movement selection display 200 is deleted, and the processing of the application is carried out. More specifically, it may be judged that contact with movement selection display 200 has not been sensed when contact with movement selection display 200 is not sensed within a preset time interval or when contact is sensed with a region other than the display region of movement selection display 200.

On the other hand, when it is judged in Step 25 that contact with movement selection display 200 was sensed in display unit 120, process-cancelling unit 150 in Step 26 cancels the process that the application carried out in accordance with a predetermined contact pattern. In other words, in the example shown in FIG. 4, the process that the application carried out for a "Z" contact (such as writing "Z" on a scheduler) is cancelled (the "Z" that was written is deleted).

When it is judged in Step 23 that the application that was displaying a screen in display region 121-1 is not an application that is registered in registration unit 170, the process of Step 26 is carried out.

In addition, the screen that is being displayed in display region 121-1 is moved to display region 121-2 by movement unit 142 in Step 27.

Upon this movement, the cancel selection display for selecting whether to cancel the movement carried out in Step 27 is displayed on display unit 120 by cancel selection display instruction unit 180 in Step 28. This cancel selection display is displayed for only a preset time interval.

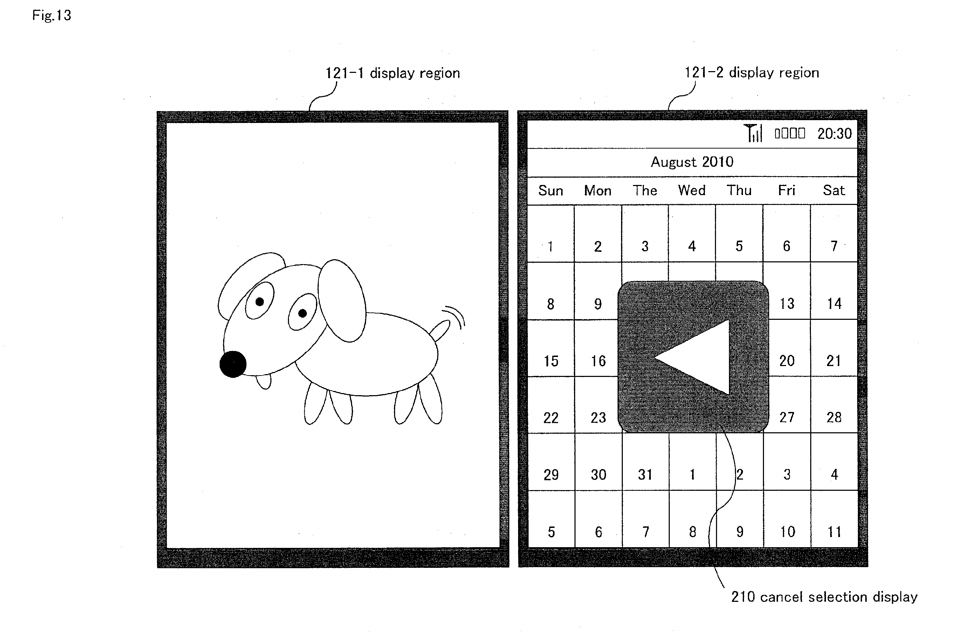

FIG. 13 shows an example of the cancel selection display that is displayed on display unit 120 shown in FIG. 11.

As shown in FIG. 13, cancel selection display 210 is displayed in display region 121-2 to which movement was made. At this time, cancel selection display 210 is displayed overlaid on the screen that is being displayed in display region 121-2 (in this case, a scheduler). No particular stipulation is imposed on the display format of this cancel selection display 210, but the display preferably prompts understanding that it is a display for returning the screen that was moved to display region 121-2 to display region 121-1. For example, as shown in FIG. 13, the display may be an arrow pointing from display region 121-2 to display region 121-1 or a triangle having an apical angle pointing from display region 121-2 toward display region 121-1.

It is then judged in Step 29 whether contact to cancel selection display 210 is sensed on display unit 120. This judgment that contact to cancel selection display 210 was sensed may be made when, for example, contact is made to cancel selection display 210 shown in FIG. 13 or when contact is made with the triangular portion that is displayed in cancel selection display 210.

When it is judged in Step 29 that contact to cancel selection display 210 was not sensed in display unit 120, the process of the application is carried out. More specifically, when contact to cancel selection display 210 is not sensed within a preset time interval, it may be judged that contact to cancel selection display 210 was not sensed.

On the other hand, when it is judged in Step 29 that contact to cancel selection display 210 was sensed in display unit 120, the movement that was carried out in Step 27 is returned to its origin by movement unit 142 in Step 30. More specifically, the screen that was moved from display region 121-1 to display region 121-2 in Step 27 moves to display region 121-1. At this time, the original screen is displayed in display region 121-2. In other words, the screens that are displayed in display regions 121-1 and 121-2 shown in FIG. 13 are returned to the screens that were displayed in display regions 121-1 and 121-2 shown in FIG. 3.

Upon this return, the application that was displaying the returned screens is registered in registration unit 170 in Step 31.

For example, when the internal construction of registration unit 170 is a construction such as shown in FIG. 8, application information that indicates the application is added as the application information. In addition, when the internal configuration of registration unit 170 is a configuration such as shown in FIG. 9, the display information that is stored in correspondence with the application information that indicates the application is rewritten from "x" to "O."

Thus, an application indicated by the application information that is registered in registration unit 170 has a high likelihood of applying as input a predetermined contact pattern for moving a screen as a normal process of the application, and the application is enabled to select whether the contact will instruct movement or will instruct input for a process.

On the other hand, an application indicated by application information that is not registered in registration unit 170 has a low probability of applying a predetermined contact pattern for moving a screen as a normal process of the application, and the necessity of confirmation each time is therefore low. The use of the above-described process enables avoidance of carrying out unnecessary processes.

By carrying out the movement selection display that is a confirmation display in the first exemplary embodiment as described hereinabove, a predetermined contact pattern with a touch panel can be preventing from moving the screen even though the contact is an input instruction to the application that is instructing the current display.

In the second exemplary embodiment, displaying a movement selection display only for registered applications enables avoidance of unnecessary display of the movement selection display and making the operator enter unnecessary selections.

Still further, in the third exemplary embodiment, the dynamic implementation of the registration of applications in the second exemplary embodiment can eliminate the trouble of registering in advance.

The processes carried out by each of the constituent elements provided in the above-described display devices 100-102 may be carried out by logic circuits that are each fabricated according to purpose. Alternatively, a program that describes the processing content may be recorded in a recording medium that can be read in display devices 100-102, and the program recorded in this recording medium may then be read by display devices 100-102 and then executed. The recording medium that can be read by display devices 100-102 refers to a removable recording medium such as a floppy (registered trademark) disk, a magneto-optic disk, a DVD, and a CD, or may refer to an HDD or memory such as ROM, RAM that is incorporated in display devices 100-102. The program that is recorded in this recording medium is read by a CPU (not shown) that is provided in display devices 100-102 whereby processing equivalent to that described hereinabove is carried out under the control of the CPU. A CPU here refers to a device that operates as a computer that executes a program that has been read from a recording medium on which the program was recorded.

Although the invention of the present application has been described with reference to exemplary embodiments, the invention of the present application is not limited to the above-described exemplary embodiments. The configuration and details of the invention of the present application are open to various modifications within the scope of the invention of the present application that will be clear to one of ordinary skill in the art.

This application claims the benefits of priority based on Japanese Patent Application No. 2010-213926 for which application was submitted on September 24, 2010 and incorporates by citation all of the disclosures of this application.

## Claims

1. A display device comprising:
a display unit that is provided with a touch panel capability and that, by the processing of an application, displays each of a plurality of screens on a respective region of a plurality of display regions;
a movement selection display instruction unit that, when said display unit has sensed a predetermined contact pattern in, among said plurality of display regions, a first display region, displays in the first display region a movement selection display for selecting whether to move the screen that is being displayed on the first display region; and
a movement unit that, when said display unit has sensed contact with said movement selection display, moves the screen that is being displayed in the first display region to,
among said plurality of display regions, a second display region other than the first display region.

2. The display device as set forth in claim 1, further comprising:
an application judging unit that, when said display unit senses a predetermined contact pattern in said first display region, judges whether the application that is displaying the
screen in the first display region is an object application that has been registered;
wherein:
said movement selection display instruction unit displays said movement selection display in said first display region only when said application judging unit has judged that the application that is displaying a screen in said first display region is said object application; and
said movement unit moves the screen that is being displayed in said first display region to said second display region when said display unit has sensed contact with said movement selection display or when said application judging unit has judged that the application that is displaying a screen in said first display region is not said object application.

3. The display device as set forth in claim 2, further comprising:
a cancel selection display instruction unit that, when said movement unit has moved said screen, displays on said display unit for a predetermined time interval a cancel selection display for selecting whether to cancel the movement; and
a registration unit that, when said display unit has sensed contact with said cancel selection display, registers as said object application an application that is displaying said screen in said display region of the movement destination of said movement;
wherein said movement unit, when said display unit senses contact with said cancel selection display, cancels the movement.

4. The display device as set forth in claim 1, wherein said display unit, upon sensing contact with, of said display unit, a region other than the display region of said movement selection display, deletes said movement selection display.

5. The display device as set forth in claim 1, wherein said display unit displays said movement selection display overlying the screen that is currently displayed.

6. The display device as set forth in claim 1, further comprising a process-cancelling unit that, when said movement unit has moved said screen, cancels the process that said application carried out in accordance with said predetermined contact pattern.

7. The display device as set forth in claim 1, wherein said display unit displays said plurality of screens adjacent to each other.

8. The display device as set forth in claim 1, wherein said display unit is physically separated for each of said plurality of display regions.

9. A display method that displays screens on a device that is equipped with a display that has a touch panel capability and that, by means of processing of an application, displays each of a plurality of screens on a respective display region among a plurality of display regions, comprising steps of:
sensing contact with said display;
when said display senses a predetermined contact pattern in, of said plurality of display regions, a first display region, displaying in the first display region a movement selection display for selecting whether to move the screen that is being displayed in the first display region; and
when contact with said movement selection display is sensed, moving the screen that is being displayed in the first display region to, of said plurality of display regions, a second display region other than the first display region.

10. The display method as set forth in claim 9, comprising steps of:
when said display senses a predetermined contact pattern in said first display region,
judging whether the application that is displaying the screen in the first display region is an object application that has been registered;
displaying said movement selection display in said first display region only when it is judged that the application that is displaying a screen in said first display region is said object application; and
moving the screen that is being displayed in the first display region to said second display region when contact with said movement selection display is sensed or when it is judged that the application that is displaying a screen in said first display region is not said object application.

11. The display method as set forth in claim 10, further comprising steps of:
when said screen has moved, displaying on said display for only a predetermined time interval a cancel selection display for selecting whether to cancel the movement;
when contact with said cancel selection display is sensed, registering the application that is displaying said screen in the display region of the movement destination of said movement as said object application; and
when contact with said cancel selection display is sensed, cancelling the movement.

12. The display method as set forth in claim 9, further comprising a step of deleting said movement selection display when contact is sensed with, of said display, a region other than the display region of said movement selection display.

13. The display method as set forth in claim 9, further comprising a step of displaying said movement selection display overlying the screen that is currently displayed.

14. The display method as set forth in claim 9, further comprising a step of cancelling a process carried out by said application according to said predetermined contact pattern when said screen is moved.

15. The display method as set forth in claim 9, further comprising a step of displaying said plurality of screens adjacent to each other on said display.

16. A program for causing a device that is equipped with a display that has a touch panel capability and that, by means of processing of an application, displays each of a plurality of screens in a respective region of a plurality of display regions to execute procedures of:
sensing contact with said display;
when said display has sensed a predetermined contact pattern in, of said plurality of display regions, a first display region, displaying in the first display region a movement selection display for selecting whether to move the screen that is being displayed in the first display region; and
when contact with said movement selection display is sensed, moving the screen that is being displayed in the first display region to, of said plurality of display regions, a second display region other than the first display region.

17. The program as set forth in claim 16, wherein said program further causes the execution of procedures of:
when said display has sensed a predetermined contact pattern in said first display region, judging whether the application that is displaying a screen in the first display region is an object application that has been registered;
displaying said movement selection display in said first display region only when it is judged that the application that is displaying a screen in said first display region is said object application; and
moving the screen that is being displayed in said first display region to said second display region when contact is sensed with said movement selection display or when the application that is displaying a screen in said first display region is judged not to be said object application.

18. The program as set forth in claim 17, wherein said program further causes execution of procedures of:
when said screen is moved, displaying on said display for only a predetermined time interval a cancel selection display for selecting whether to cancel the movement;
when contact to said cancel selection display is sensed, registering the application that is displaying said screen in the display region of the movement destination of said movement as said object application; and
when contact to said cancel selection display is sensed, canceling the movement.

19. The program as set forth in claim 16, wherein said program further causes execution of a procedure of deleting said movement selection display when contact is sensed with, of said display, a region other than the display region of said movement selection display.

20. The program as set forth in claim 16, wherein said program further causes execution of a procedure of displaying said movement selection display overlying the screen that is currently being displayed.

21. The program as set forth in claim 16, wherein said program further causes execution of a procedure of, when said screen has been moved, cancelling the process that was carried out by said application in accordance with said predetermined contact pattern.

22. The program as set forth in claim 16, wherein said program further causes execution of a procedure of displaying said plurality of screens adjacent to each other on said display.
